(19) Europäisches Patentamt
European Patent Office
Office européen des brevets

(11) Publication number: **0 211 127 B1**

(12) **EUROPEAN PATENT SPECIFICATION**

(45) Date of publication of patent specification :
06.02.91 Bulletin 91/06

(51) Int. Cl.⁵ : **B23F 19/10**

(21) Application number : **85630120.5**

(22) Date of filing : **01.08.85**

(54) **Method for chamfering the edges of gear teeth.**

(43) Date of publication of application :
25.02.87 Bulletin 87/09

(45) Publication of the grant of the patent :
06.02.91 Bulletin 91/06

(84) Designated Contracting States :
DE FR GB IT

(56) References cited :
US-A- 2 135 819
US-A- 2 433 201
US-A- 2 758 512
US-A- 2 976 772
US-A- 3 083 616
US-A- 3 286 593
US-A- 4 303 359

(73) Proprietor : **UNITED TECHNOLOGIES CORPORATION**
**United Technologies Building 1, Financial Plaza**
**Hartford, CT 06101 (US)**

(72) Inventor : **Seitelman, Leon Harold**
**110 Cambridge Drive**
**Glastonbury Connecticut 06033 (US)**
Inventor : **Kaveckas, Edward John**
**154 Kelly Road**
**South Windsor Connecticut 06074 (US)**

(74) Representative : **Weydert, Robert et al**
**OFFICE DENNEMEYER S.à.r.l. P.O. Box 1502**
**L-1015 Luxembourg (LU)**

## Description

The present invention relates according to the precharacterising part of claim 1 to the chamfering of the ends (sides) of gear teeth, most particularly to the method of chamfering the sides of spur gears.

The advantages in durability and ease of engagement which result from chamfering the sharp edges of the teeth of gears, splines and the like have been well appreciated for a number of years. The early tedious methods of chamfering by hand, such as with a file, have been overcome with the introduction of specialized machines adapted for such purpose.

There are of course a number of conceivable machines which can be used to provide the uniform chamfer which is desired on the edges of gear teeth. In some instances the desired beveling has been achieved by cold working. More preferably, the chamfering is obtained by machining, such as those which utilize the circular motion of a planar faced cutting tool. One machine generally of the type to which the invention is pertinent is shown in US-A-3,286,593 which discloses a method according to the precharacterizing portion of independent claim 1. Another machine, mentioned below, is called a Sheffield machine. Such machines are adapted to provide the cutting tool with reciprocating arcuate motion, whereby a chamfer is made on each forward stroke, and the gear is indexed during each return stroke to present a new tooth form to the cutter. The present invention is specifically adapted to such types of machines wherein the tool swings through an arc in a plane which is generally perpendicular to the plane of the sides of the teeth being chamfered. Since gear teeth have involute shapes of some complexity, and since the motion of the cutting tool has a transverse circular motion, the geometry of the tool is not at all evident. Accordingly, the making of cutting tools for chamfering machines has remained within the realm of a skilled tool and die maker. Such toolmaking skill is acquired by example from their predecessors and from their own experience and judgement. Essentially, a "cut and try" procedure is used. That is, the craftsman relies on his experience to make a first tool. For example, a 45 degree projection of the tooth form might be used, since the tangent to the arcuate motion of the cutting tool with respect to the plane of the teeth ends approximately lies on such an incline. The toolmaker then places the tool in an actual machine and tests its cutting action on an actual gear. After observing the results according to imperfections of the chamfer which is produced, he repetitively changes the contour of the tool until he arrives at a tool which hopefully produces the desired specification chamfer.

In precision and high performance machinery, the specification on chamfer width can be relatively tight. For example, a chamfer on a typical gear of about 280 mm (11 inch) diameter and having 69 teeth, might require the chamfer width of 1.016 ± 0.254 mm (0.040 ± 0.010 inch). Typically, the chamfer is placed on the gear prior to hardening. When the gear is subsequently finished by further material removal, a comparatively small chamfer remains. Thus the location of the chamfer must be accurately placed to achieve the desired purpose. Despite the ability of skilled mechanics, the making of a tool is a tedious and labor intensive process. Actual gears must be made before the tool shape can be ascertained, leading to production delays. Valuable gear parts can be consumed in the trial and error tool-making process. And perfection is seldom achieved ; some inferiority in the quality of the chamfer must often be accepted in the interests of expediency and economy.

The object of the invention is to provide more precise and uniform chamfers on gears, and to provide a means for determining the dimensions of a gear chamfering tool in a direct fashion, without the necessity of carrying out experiments with tools on actual gear parts.

To achieve this according to the invention, there is provided a method of producing on the edges of the teeth of a gear a chamfer having desired maximum and minimum edge-to-edge width dimensions along its length, where the edge of each gear tooth is formed by the intersection of a tooth side generally lying in an x-y plane and a tooth flank generally running perpendicular thereto in a z axis direction, while using a cutting tool which has circular motion about an axis perpendicular to the y-z plane, characterized by selecting a first tool profile and determining s-dimensions at a multiplicity of points along the length of the chamfer which would be produced by the first tool profile, where the s-dimensions are the distances across the chamfer from an edge thereof to the nearest point on the opposing edge thereof ; comparing the s-dimensions to the chamfer width desired at each of the said multiplicity of points ; iteratively selecting further tool profiles each of which is different from the prior tool profile, and determining for each the s-dimensions at a multiplicity of points along the length of the chamfer which would be produced and comparing them to the chamfer widths desired, until a final tool profile is determined, which profile provides s-dimensions falling within the range of the desired minimum and maximum chamfer widths ; making a tool having substantially said final profile, and ; chamfering the teeth with the tool so made.

As a starting point it is preferred to take the dimensions of a tool profile which produces zero chamfer and incrementally iterate thereafter.

In the practice of the invention, tools are now produced which very precisely make uniform chamfers without any need for trial and error testing and correction by a toolmaker. Not only are tolerances conformed with but the desired nominal dimensions are essentially achieved.

The foregoing and other features and advantages of the present invention will become more apparent from the following description of preferred embodiments and accompanying drawings, wherein :

Figure 1 shows a gear in perspective, with the axes which define it in the description of the invention.

Figure 2 is a more detailed view of a few of the teeth of the gear in Figure 1.

Figure 3 is a simplified view of parts of the gear chamfering machine and a gear, illustrating with Figure 1 how the gear is chamfered by the reciprocating circular motion of the tool.

Figure 4 is a more detailed view of the gear and cutter relationships shown in Figure 3.

Figures 5 and 6 are related views of the side of the gear and the normal plane of the cutter, respectively, showing that the y axes lie in the same plane and that the x axis dimensions for both are identical.

Figure 7 is a cross section through a gear along the y-z plane showing the chamfer produced by a cutter in the root land location.

Figure 8 is a perspective view of a gear tooth showing the chamfer and a physical manifestation of the opposing s-dimensions at a point.

Figures 9 and 10 comprise a flow chart showing the steps by which the inventive tool is made.

The invention is described in terms of the cutting of a conventional spur gear on a deburring machine. Nonetheless, the invention will be appreciated as being applicable to the chamfering of other types of gears, splines and the like wherein the relationship between the tool, the tool motion, and the workpiece present similar problems to those described herein.

The description which follows is mathematical in nature and the method is most readily practiced using a digital computer. While the iterative optimization is only efficiently carried out by means of computer, the method of the invention will be appreciated as being susceptible to solution by manual means, i.e. physical making, measurement and calculation, but for the desire for efficiency and highest accuracy. When the mathematical description of the invention is understood, it will be appreciated that the method of the invention involves measurement and use of the parameters which heretofore have not been utilized in the older experiential or empirical procedures practiced by craftsmen, to the extent that they are susceptible to deduction and articulation.

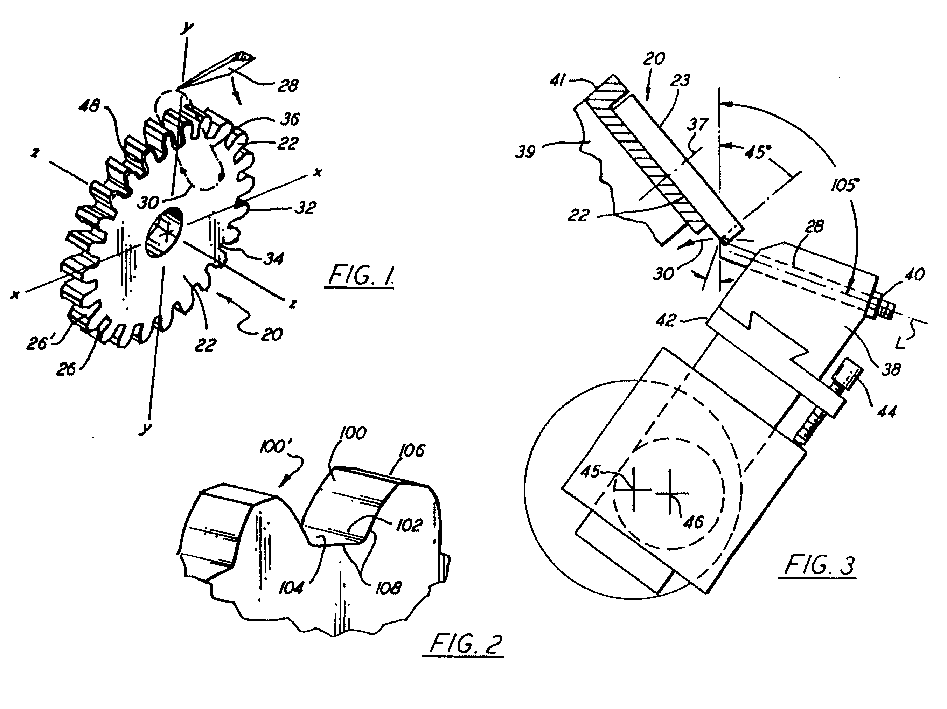

Figure 1 shows a spur gear 20 having orthogonal x, y and z axes. The gear has sides (or ends, or faces) 22, 23 with which the several teeth 24 intersect. Referring to both Figure 1 and Figure 2, each tooth has the characteristic involute shape on its active profiles 100, 100'. Each profile of a tooth transitions to a fillet 102. The adjacent teeth are connected by a root land 104. At the tip 32 end of each tooth, there is a top land 106. The surfaces 100, 102, half of 104 (and sometimes including a portion of the land 106), are collectively called hereinafter the flank 26 of a tooth. The present invention is directed to making of a chamfer 48 of the edge 108 formed by the intersection of the flank with the gear side. In the use of the machine the edges formed at the opposing flanks 26, 26' of adjacent teeth are chamfered by motion of the tool 28, as shown in Figures 1 and 3.

Referring to Figure 1, the tool has a cutting motion described by the circular path 30, wherein it removes material progressively from the tip 32, to the root 34 of the opposing flanks of adjacent teeth. When the cutting action is complete, the cutter returns on a slightly different path 36, owing to a change in the location of the center of rotation of the tool bit, as it is built into the machine tool.

Referring to Figure 3, the gear 20 is shown mounted in a pocket-like fixture 41 attached to the machine base 39, so that is is able to rotate about its centerline 37. The gear rotates with a stepping motion in cooperation with the movement of the tool 28, so that all the gear teeth may be chamfered. As will be seen from Figure 3, the motion of the cutting tool is such that it chamfers the underside 22 of the gear, as it is mounted on the machine. To chamfer the opposing side 23 the gear is removed and placed in the fixture so side 23 is nearest the base of the machine.

The tool 28 is held in a holder 38 so that it has a multiplicity of motions with respect to the gear. First, the tool 28 is adapted to move axially along its longitudinal axis L, by means of adjusting nut 40. Second, the tool holder 38 is adapted to move with respect to the slide 42 in a direction transverse to the plane of the Figure, so that the tool axis may be positioned along a diameter (y axis) of the gear 20. Third, the slide 42 moves in and out by means of screw 44 to move the arc path 30 further or closer to the gear. Fourth, the tool is adapted to move along a rotary path, in the plane of the Figure, due to rotation about the pivots 45, 46. Adjustment of the pivot points causes the tool to move along the eccentric path 30, 36 which was described previously. Such eccentric circular motion mechanisms are well known to those who are familiar with machine tools.

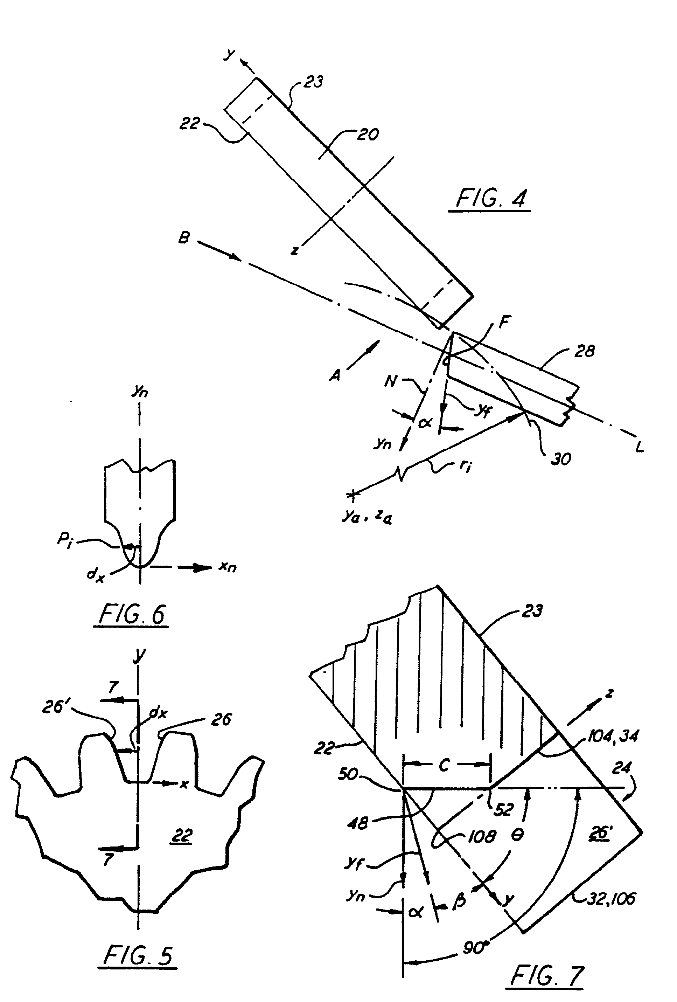

Figures 4-6 and 8 illustrate some of the terminology which is used in this description of the invention.

Figure 4 is another view of the relationship between the gear 20 and the cutter 28, as shown in Figure 3. The tool 28 has a long axis L, and a front face F which is inclined at an angle $\alpha$ with respect to the normal plane N of the tool length. The dimensions of the normal plane N constitute the tool profile which is referred to herein. The path 30 of a point $P(\hat{x}, \hat{y}, \hat{z})$ is described by the sweep of a radius $r_i$ about the pivot point $(\hat{x}, y_a, z_a)$. The gear 20 has primary axes x, y and z (where x is in the direction perpendicular to the plane of Figure 4). The tool bit also has x, y and z axes. By definition herein, the x axis of the tool bit is made parallel to the x axis of the gear. The y axes ($y_f$ and $y_n$) and z axis of the tool bit are inclined with respect to the primary y and z axes.

Figures 5 and 6 show views of the gear and tool bit in the directions A and B respectively, as indicated in Figure 4. Figures 5 and 6 are purposely vertically aligned in the drawing to illustrate that the y axes lie in the same plane and that the x axes of each part are parallel. Thus, the point $P_i$ on the cutter face can only cut material from the gear which has the same coordinate, namely dx. With this convention, the position of point P can be defined, first when it reaches the flank 26' and then, when it pierces the gear side 22.

Figure 7 shows a chamfer 48 having width c at the root 104, 34 of the gear as it will be cut by the cutter having a normal cross section which is defined by a set of points $P_i$ with coordinates $(\bar{x}_i, \bar{y}_i)$ ; i = 1, 2..., n in the x-$y_n$ coordinate system. Since the cutter face F makes an angle $\alpha$ with the normal plane N, the cutter face points have coordinates $(\bar{x}_i, \bar{y}_i \sec \alpha)$ in the x-$y_f$ coordinate system of the plane F. The resulting chamfer 48 at the root land of the adjacent teeth 24 is desired to have a width c, as shown. Consequently, the coordinates

$$(\widetilde{x}_i, \widetilde{y}_i, \widetilde{z}_i)$$

of the points on the cutter face F in the x, y, z coordinate system satisfy the relations

$$\widetilde{x}_i = x_i = \bar{x}_i$$

$$\widetilde{y}_i + c \cos\theta = y_i \cos\beta = y_i \sec \alpha \cos\beta$$

$$\widetilde{z}_i = - y_i \sin\beta = - \bar{y}_i \sec \alpha \sin\beta$$

Where

$$\beta = \pi over - \alpha - \theta,$$

Thus, we have

$$\widetilde{x}_i = \bar{x}_i$$

$$\widetilde{y}_i = \bar{y}_i \sec \alpha \sin(\alpha+\theta) - c \cos\theta$$

$$\widetilde{z}_i = - \bar{y}_i \sec \alpha \cos(\alpha + \beta).$$

Consequently, these equations for the cutter face can be solved for their intersections with the gear side 22 (where z = 0) and with the gear flank 26, 26'. Since the cutter moves by rotation about the axis y =$y_a$, z = $z_a$ and the distance $r_i$ to point $P_i$ is

$r_i = [(Y_a - Y_i)^2 + (Z_a - Z_i)^2]^{\frac{1}{2}}$

Then we have, for the intersection of $P_i$ and the gear side 22

$x_i = x_i$

$y_i = y_a \pm (r_i^2 - z_a^2)^{\frac{1}{2}}$

$z_i = 0$

where the sign is chosen in $y_i$ so that $y_i$ is nearer to zero, to be consistent with the physical problem shown in the Figures and to avoid an irrelevant solution.

Similarly, to determine the intersection of the cutter face F with the gear flank 26, 26' we recognize that for x = $x_i$, if,

$$(x_i, \widetilde{\widetilde{y}}_i, 0)$$

is the coordinate of a point on the gear tooth (determined by piecewise linear interpolation between successive gear tooth data points), then the flank contains points of the form

$$(x_i, \widetilde{y}_i, z)$$

for $z > 0$. The cutter face point $P_l$ intersects the flank at

$$(x_i, \widetilde{\widetilde{y}}_i, \widetilde{\widetilde{z}}_i)$$

where

$$r_i = \left( (y_a - \widetilde{\widetilde{y}}_i)^2 + (z_a - \widetilde{\widetilde{z}}_i)^2 \right)^{1/2}$$

Similarly to above, the smaller value of $z_l$ is chosen.

At this point, having defined the set of cutting tool intersections with the tooth side and flank, piecewise linear interpolation gives us two space curves which define the opposing edges 50, 52 of the chamfer, respectively at the side and flank. This permits evaluation of parameters indicative of the variation in chamfer width c. For simplicity, the typical side intersection 50 is denoted by $U_i = (x_i, y_i, 0)$ and the typical flank intersection 52 by

$$V_j = (x_j, \widetilde{y}_j, \widetilde{z}_j)$$

Thus, the distance $d_{ij}$ between $U_i$ and $V_j$ is

$$d_{ij} = \left[ (x_i - x_j)^2 + (y_i - \widetilde{y}_j)^2 + \widetilde{z}_j^2 \right]^{1/2}.$$

And the minimum of the $d_{ij}$'s can be found for all j, namely

$$u_i = \min_j (d_{ij})$$

Thus, it will be appreciated that $u_i$ is the shortest distance across the chamfer surface, as measured from the gear side at $(x_i, y_i, 0)$.

Similarly, the width $v_l$ of the chamfer as measured from a point

$$(x_i, \widetilde{y}_i, \widetilde{z}_i)$$

along the flank intersection $V_l$ is

$$v_i = \min_j \left[ (x_j - x_i)^2 + (y_j - \tilde{\tilde{y}}_i)^2 + \tilde{\tilde{z}}^2 \right]^{1/2}$$

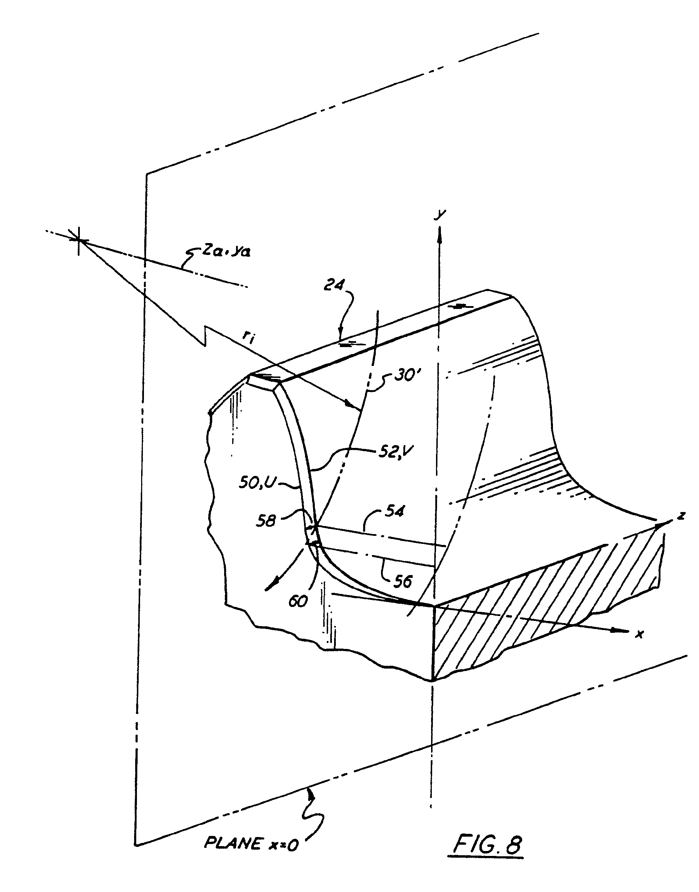

It will be appreciated upon reflection that the foregoing chamfer width functions (hereinafter called s-lengths) $u(x)$ und $v(x)$ are not necessarily identical, nor dimensions which lie normal to the mean width line running along the chamfer length. This is made graphically evident in the example of Figure 8. A point P on the cutter traveling on cutter path 30' first contacts the tooth along chamfer flank edge 52, V and last contacts the tooth at side edge 50, U. Both points lie at the same x-distance 54, 56 from the y axis. The s-dimensions 58, 60 from the opposing edges are seen to be offset. It will also be appreciated that since they are inscribed circle radii, for a chamfer more irregular than that shown, the s-dimensions will be non-parallel. They are physically measurable on a given chamfer, of course, as they are referenced from the respective opposing chamfer edges. Their use is prudent in achieving the object of the invention insofar as chamfer width, especially near the tip 32 and root 34 of the gear teeth. If the s-lengths lie within the desired chamfer tolerance band, then the tool may be satisfactory for the gear. If they do not, then the cutter is changed until they do. That is, if at least one of

$$c_{min} \leq u(x) \leq c_{max}$$

and

$$c_{min} \leq v(x) \leq c_{max}$$

does not hold, where $c_{min}$ and $c_{max}$ are, respectively, the minimum and maximum specified chamfer widths, then the cutter geometry must be modified.

Several methods to improve the cutter shape are possible for certain situations. For example, if both $u(x)$ and $v(x)$ are larger than $c_{max}$ for $x = x_i$, for some i, then the chamfer is obviously too wide at $x_i$ and the cutter geometry must be altered to cut less material. That is, the corresponding $y_i$ is decreased.

A better solution is to treat all the $y_i$ as variables and to treat the problem as one of optimization. Thus $y_i$ is chosen so that a minimum value is provided by the function

$$f = \sum_{i=1}^{n} \left\{ [u(x_i) - c_{max}]_+ + [c_{min} - u(x_i)]_+ + [v(x_i) - c_{max}]_+ + [c_{min} - v(x_i)]_+ \right\}^2$$

where

$$\zeta_+ = \begin{cases} \zeta & \text{if } \zeta \geq 0 \\ 0 & \text{if } \zeta < 0 \end{cases}$$

Since f is a sum of squares, $f \geq 0$. When both $u(x)$ and $v(x)$ lie within the specified or desired chamfer width tolerance band, then none of the terms in the square brackets is positive ; therefore f is zero. Hence f is minimized when the cutter is acceptable.

The most refined procedure is to determine the minimum f by considering all $y_i$ as variables and solving the unconstrained minimization problem. But it is considerably more efficient computationally to use a smaller set of data points (e.g. 50) and to fit this reduced set of points parametrically to produce spline fits to describe the cutter surface F, to determine the function f corresponding to the set of data points $(x_i, y_i)$ interpolated to this spline fit, and to modify the reduced set of variables so as to minimize f.

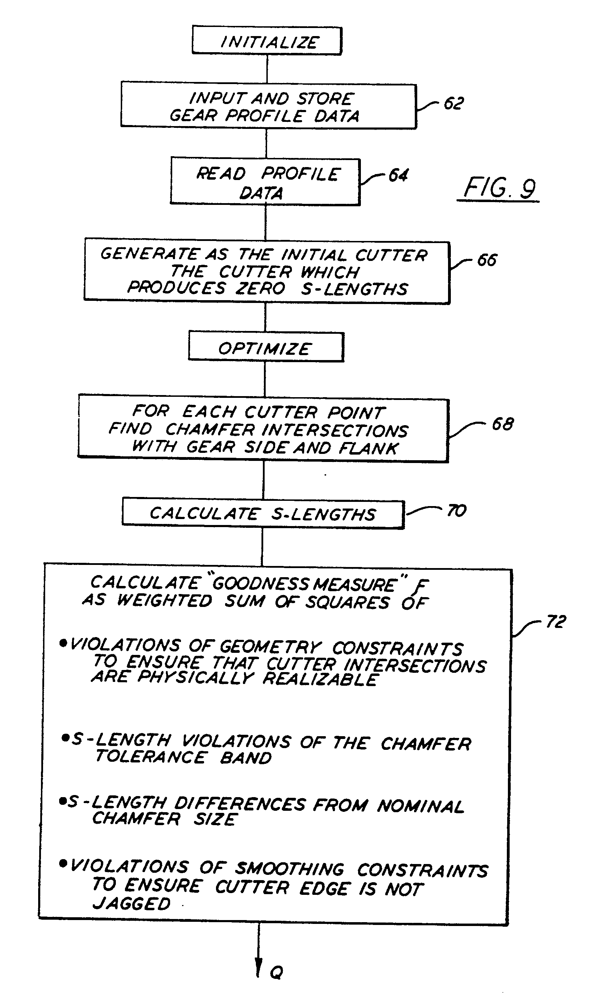

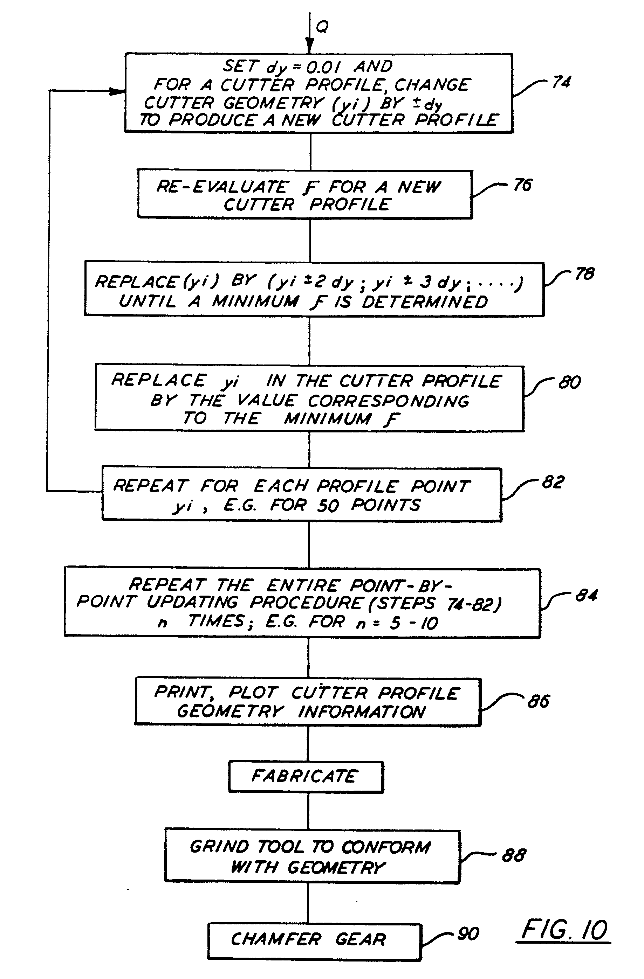

The implementation of the fit which we have thus far employed to advantage is shown in its essentials in Figures 9 and 10 as a flow chart suitable for programming a digital computer. Referring to the chart, the initialization steps 62-66 include the generation of an initial cutter which produces zero s-lengths (and zero chamfer width). Although other starting points based on tool designer experience or other calculations may be used, the zero s-length profile is an especially convenient starting point. The procedure described herein allows its easy determination and the approach does not require a toolmaker's judgment. In the optimization steps 68-86, the sub-steps of the "goodness measure, f" determination at step 72 enable not only a chamfer which has widths within tolerance, but which also is smooth along the edges and surface and which approximates the nominal (i.e. average of the maximum and minimum) width. Thus, a tool is made which is substantially better than trial and error has been able to produce. The incremental iteration steps 74-82 are repeated for a desired number of points along the cutter normal profile. We have used 50 and found the results to be satisfactory, as have we found 5-10 updatings in step 84. However, in both instances departures from these values may be usable, according to the computational time available and the quality of the output results. At step 86 the results are output to enable fabrication of the tool and chamfering of the gear. Of course additional outputs and visual displays beyond those indicated may be utilized at various steps in the foregoing procedure, and if desired, provisions may be made for interaction between a tool designer and the operative steps, such as to enable sub-problem optimization of a particular region of the tool profile, prior to the complete solution.

## Claims

1. Method of producing on the edges of the teeth (24) of a gear (20) a chamfer having desired maximum and minimum edge-to-edge width dimensions along its length, where the edge of each gear tooth is formed by the intersection of a tooth side (22) generally lying in an x-y plane and a tooth flank (26, 26') generally running perpendicular thereto in a z axis direction, while using a cutting tool (28) which has circular motion (30) about an axis perpendicular to the y-z plane, characterised by selecting a first tool profile and determining s-dimensions (59, 60) at a multiplicity of points ($P_i$) along the length of the chamfer which would be produced by the first tool profile, where the s-dimensions are the distances across the chamfer from an edge (52, V) thereof to the nearest point on the opposing edge (50, U) thereof ; comparing the s-dimensions to the chamfer width desired at each of the said multiplicity of points ; iteratively selecting further tool profiles each of which is different from the prior tool profile, and determining for each the s-dimensions at a multiplicity of points along the length of the chamfer which would be produced and comparing them to the chamfer widths desired, until a final tool profile is determined, which profile provides s-dimensions falling within the range of the desired minimum and maximum chamfer widths ; making a tool having substantially said final profile, and ; chamfering the teeth with the tool so made.

2. Method according to claim 1, characterized by determining a pair of s-dimensions at each of the multiplicity of points, which pair comprises a first s-dimension referenced from a point on the tooth flank edge of the chamfer and a second s-dimension referenced from a point on the tooth side edge of the chamfer, the pair of chamfer edge reference points lying along the circular cutting path of a point on the tool profile.

3. Method according to claim 1, characterized by selecting as the first tool profile that profile which characterizes a tool shaped to contact the edges of the teeth while producing a chamfer of essentially zero width.

4. Method according to claim 1, characterized by minimizing the differences between the s-dimensions and the average chamfer width at the points where the s-dimensions are determined.

## Ansprüche

1. Verfahren zum Herstellen einer Fase an den Kanten der Zähne (24) eines Zahnrades (20), die gewünschte maximale und minimale Kante-Kante-Breitenabmessungen über ihrer Länge hat, wobei die Kante jedes Zahnradzahns durch den Schnitt einer Zahnseite (22), die insgesamt in einer x-y-Ebene liegt, und einer Zahnflanke (26, 26'), die insgesamt rechtwinkelig dazu in einer z-Achsenrichtung verläuft, gebildet wird, unter Verwendung eines Schneidwerkzeuges (28), das eine kreisförmige Bewegung (30) um eine zu der y-z-Ebene rechtwinkelige Achse hat, gekennzeichnet durch Auswählen eines ersten Werkzeugprofils und Bestimmen von s-Abmessungen (59, 60) in einer Vielzahl von Punkten ($P_i$) über der Länge der Fase, die durch das erste Werkzeugprofil hergestellt werden würde, wobei die s-Abmessungen die Abstände über der Fase von einer Kante (52, V) derselben zum nächstgelegenen Punkt auf der entgegengesetzten Kante (50, U) derselben sind ; Vergleichen der s-Abmessungen mit der Fasenbreite, die in jedem Punkt der Vielzahl von Punkten gewünscht wird ; iteratives Auswählen von weiteren Werkzeugprofilen, von denen sich jedes von dem vorherigen Werkzeugprofil unterscheidet, und Bestimmen der s-Abmessungen für jedes in einer Vielzahl von Punkten über der Länge der Fase, die erzeugt werden würde, und Vergleichen derselben mit den gewünschten Fasenbreiten, bis ein Endwerkzeugprofil bestimmt wird, das s-Abmessungen ergibt, die in den Bereich der gewünschten minimalen und maximalen Fasenbreiten fallen ; Herstellen eines Werkzeuges, das im wesentlichen das Endprofil hat ; und Anfasen der Zähne mit dem so hergestellten Werkzeug.

2. Verfahren nach Anspruch 1, gekennzeichnet durch Bestimmen eines Paares von s-Abmessungen in jedem Punkt der Vielzahl von Punkten, das eine erste s-Abmessung bezogen auf einen Punkt auf der Zahnflankenkante der Fase und eine zweite s-Abmessung bezogen auf einen Punkt auf der Zahnseitenkante der Fase umfaßt, wobei das Paar Fasenkantenbezugspunkte längs des kreisförmigen Schneidweges eines Punktes auf dem Werkzeugprofil liegt.

3. Verfahren nach Anspruch 1, gekennzeichnet durch Wählen desjenigen Profils als erstes Werkzeugprofil, das ein Werkzeug kennzeichnet, welches so geformt ist, daß es die Kanten der Zähne berührt, während es eine Fase mit im wesentlichen der Breite null erzeugt.

4. Verfahren nach Anspruch 1, gekennzeichnet durch Minimieren der Differenzen zwischen den s-Abmessungen und der mittleren Fasenbreite in den Punkten, wo die s-Abmessungen bestimmt werden.

## Revendications

1. Procédé de production, sur les arêtes des dents (24) d'une roue d'engrenage (20), d'un chanfrein ayant des dimensions en largeur, d'un bord à l'autre, maximale et minimale désirées, le long de sa longueur, l'arête de chaque dent de la roue d'engrenage étant formée par l'intersection d'un côté ou face (22) de la dent se trouvant généralement dans un plan x-y, et d'un flanc (26, 26') de la dent s'étendant généralement perpendiculairement à ce côté, dans la direction d'un axe z, en utilisant un outil de coupe (28) qui a un mouvement circulaire (30) autour d'un axe perpendiculaire au plan y-z, caractérisé en ce qu'on sélectionne un premier profil d'outil, et on détermine des dimensions s (58, 60) à l'endroit d'une multiplicité de points (Pi) suivant la longueur du chanfrein qui serait produit par le premier profil d'outil, ces dimensions s étant les distances en travers du chanfrein, entre un bord de celui-ci (52, V) et le point le plus proche situé sur le bord opposé (50, U) du chanfrein, on compare les dimensions s avec la largeur du chanfrein désirée en chacun des points de la multiplicité de points, on sélectionne par itérations d'autres profils d'outil dont chacun est différent du profil d'outil antérieur, et on détermine, pour chacun d'eux, les dimensions s à l'endroit d'une multiplicité de points suivant la longueur du chanfrein qui serait produit, et on les compare avec les largeurs désirées pour le chanfrein, jusqu'à ce que soit déterminé un profil d'outil final qui fournit des dimensions s tombant dans la plage des largeurs de chanfrein minimale et maximale désirées, on fabrique un outil ayant sensiblement ce profil final et on chanfreine les dents avec l'outil ainsi fabriqué.

2. Procédé suivant la revendication 1 caractérisé en ce qu'on détermine une paire de dimensions s en chacun des points de la multiplicité de points, cette paire comprenant une première dimension s prise à partir d'un point sur le bord du chanfrein situé sur le flanc de la dent et une seconde dimension s prise à partir d'un point sur le bord du chanfrein situé sur le côté de la dent, la paire de points de référence sur les bords du chanfrein se trouvant le long du trajet de coupe circulaire d'un point sur le profil de l'outil.

3. Procédé suivant la revendication 1 caractérisé en ce qu'on sélectionne, en tant que premier profil d'outil, le profil qui caractérise un outil conformé de manière à venir en contact avec les arêtes des dents en produisant un chanfrein de largeur pratiquement nulle.

4. Procédé suivant la revendication 1 caractérisé en ce que l'on réduit au minimum les différences entre les dimensions s et la largeur moyenne du chanfrein à l'endroit des points où les dimensions s sont déterminées.

FIG. 3

FIG. 2

FIG. 1

FIG. 4

FIG. 6

FIG. 5

FIG. 7

PLANE x=0

FIG.8

INITIALIZE

INPUT AND STORE
GEAR PROFILE DATA — 62

READ PROFILE
DATA — 64

*FIG. 9*

GENERATE AS THE INITIAL CUTTER
THE CUTTER WHICH
PRODUCES ZERO S-LENGTHS — 66

OPTIMIZE

FOR EACH CUTTER POINT
FIND CHAMFER INTERSECTIONS
WITH GEAR SIDE AND FLANK — 68

CALCULATE S-LENGTHS — 70

CALCULATE "GOODNESS MEASURE" F
AS WEIGHTED SUM OF SQUARES OF — 72

●VIOLATIONS OF GEOMETRY CONSTRAINTS
TO ENSURE THAT CUTTER INTERSECTIONS
ARE PHYSICALLY REALIZABLE

●S-LENGTH VIOLATIONS OF THE CHAMFER
TOLERANCE BAND

●S-LENGTH DIFFERENCES FROM NOMINAL
CHAMFER SIZE

●VIOLATIONS OF SMOOTHING CONSTRAINTS
TO ENSURE CUTTER EDGE IS NOT
JAGGED

Q

↓ Q

SET dy = 0.01 AND
FOR A CUTTER PROFILE, CHANGE
CUTTER GEOMETRY (yi) BY ± dy
TO PRODUCE A NEW CUTTER PROFILE — 74

RE-EVALUATE F FOR A NEW
CUTTER PROFILE — 76

REPLACE (yi) BY (yi ± 2 dy ; yi ± 3 dy ; ....)
UNTIL A MINIMUM F IS DETERMINED — 78

REPLACE yi IN THE CUTTER PROFILE
BY THE VALUE CORRESPONDING
TO THE MINIMUM F — 80

REPEAT FOR EACH PROFILE POINT
yi , E.G. FOR 50 POINTS — 82

REPEAT THE ENTIRE POINT-BY-
POINT UPDATING PROCEDURE (STEPS 74-82)
n TIMES ; E.G. FOR n = 5 - 10 — 84

PRINT, PLOT CUTTER PROFILE
GEOMETRY INFORMATION — 86

FABRICATE

GRIND TOOL TO CONFORM
WITH GEOMETRY — 88

CHAMFER GEAR — 90

_FIG. 10_